Europäisches Patentamt

European Patent Office

Office européen des brevets

(19)

(11) Veröffentlichungsnummer: **0 012 776**
**B1**

(12) **EUROPÄISCHE PATENTSCHRIFT**

(45) Veröffentlichungstag der Patentschrift: **15.12.82**

(21) Anmeldenummer: **78101813.0**

(22) Anmeldetag: **21.12.78**

(51) Int. Cl.³: **D 04 H 1/64,**
**D 06 M 15/00, C 08 L 33/08**

(54) **Verfahren zur Verfestigung von Vliesstoffen.**

(43) Veröffentlichungstag der Anmeldung:
**09.07.80 Patentblatt 80/14**

(45) Bekanntmachung des Hinweises auf die Patenterteilung:
**15.12.82 Patentblatt 82/50**

(84) Benannte Vertragsstaaten:
**BE DE FR GB IT NL**

(56) Entgegenhaltungen:
**DE - A - 1 815 329**
**DE - A - 2 124 691**
**DE - A - 2 124 692**

(73) Patentinhaber: **Firma Carl Freudenberg**
**Höhnerweg 2**
**D-6940 Weinheim/Bergstrasse (DE)**

(72) Erfinder: **Föttinger, Walter, Dr.**
**Leberstrasse 77**
**D-6940 Weinheim/Bergstrasse (DE)**
Erfinder: **Tecl, Bohuslav**
**Im Langgewann 57**
**D-6940 Weinheim/Bergstrasse (DE)**
Erfinder: **Fahrbach, Erich, Dr.**
**Zinkgräfstrasse 62**
**D-6940 Weinheim/Bergstrasse (DE)**

(74) Vertreter: **Weissenfeld-Richters, Helga, Dr.**
**Höhnerweg 2**
**D-6940 Weinheim/Bergstrasse (DE)**

EP 0 012 776 B1

Verfahren zur Verfestigung von Vliesstoffen

Die Erfindung betrifft ein Verfahren zur Verfestigung eines Faservlieses durch Aufdrucken von 5 bis 30% seines Gewichtes eines hochviskosen, präpolymeren Bindemittels in einem Muster auf eine oder beide Oberflächen, und durch dessen nachfolgende Aushärtung unter der Einwirkung einer ultravioletten Strahlung.

Faservliese der angesprochenen Art bestehen aus mehr oder weniger regellos zusammengelagerten Fasern aus natürlichen und/oder synthetischen Werkstoffen, die, abgesehen von der gegenseitigen Verschlingung, keinerlei Zusammenhalt haben. Insbesondere bei niedrigen Gewichtsklassen ist die daraus resultierende Verfestigung so gering, daß das Vlies praktisch keine Eigenstabilität aufweist. Das Vlies verliert infolgedessen seinen Zusammenhalt, sobald es ohne eine flächenhafte Abstützung ist. Die Erfindung bezieht sich auf die Verfestigung solcher Faservliese.

Das den Oberbegriff bildende Verfahren ist aus DE—OS 26 18 245 bekannt. Danach ist es vorgesehen, ein durch Elektronenstrahlung härtbares Bindemittel in irgend einem gewünschten Muster auf die Oberfläche des zu verfestigenden Vliesstoffes aufzudrucken und durch anschließende Bestrahlung mit Elektronenstrahlung zu verfestigen. Dabei sind jedoch verschiedene Probleme noch unberücksichtigt geblieben, die eine Einführung des Verfahrens in eine großtechnische Produktion erschweren.

Eines dieser Probleme resultiert aus den spezifischen Eigenschaften der zur Verfügung stehenden präpolymeren Bindemittel, insbesondere aus deren Viskosität in Verbindung mit der geringen mechanischen Stabilität der bedruckten Vliesstoffe. Dieses wird nachfolgend erläutert:

Die Festigkeit in vernetztem Zustand steigt bei den zur Verfügung stehenden präpolymeren Bindemitteln mit zunehmendem Molekulargewicht. Um eine gute Vliesverfestigung zu erzielen, ist es deshalb wünschenswert, präpolymere Bindemittel zu verwenden, die ein hohes Molekulargewicht haben. Eine hohes Molekulargewicht bedingt jedoch gleichzeitig eine hohe Viskosität, und Präpolymere mit einem hohen Molekulargewicht lassen sich deshalb schwierig in gleichmäßiger Verteilung und in relativ geringer Auftragsmenge auf ein Vlies aufbringen. Das trifft insbesondere dann zu, wenn das Aufbringen nur in bestimmten Bereichen erfolgen soll, beispielsweise durch einen Druckvorgang und wenn das Vlies keinerlei Vorverfestigung aufweist.

In der genannten Literaturstelle wird diese Schwierigkeit umgangen, indem die Viskosität des verwendeten präpolymeren Bindemittels durch Zusatz eines Lösungsmittels herabgesetzt wird. In dem Ausführungsbeispiel 9 ist es daneben zusätzlich vorgesehen, das Faservlies vor dem Aufbringen des präpolymeren Bindemittels durch thermische Aktivierung von niedrig schmelzenden Bindefasern zu verkleben. Beide Maßnahmen wirken sich nachteilig aus.

Die Verwendung von Lösungsmitteln erfordert stets einen hohen technischen Aufwand zur Reinhaltung der Luft an der Arbeitsstätte und außerhalb der Produktionsanlage sowie zur Rückgewinnung der Lösungsmittel. Brennbare Lösungsmittel, wie in der genannten Literaturstelle verwendet, erfordern darüber hinaus einen extremen technischen Aufwand zur Vermeidung von Bränden oder Explosionen.

Die genannte thermische Vorverklebung des Faservlieses kann im Anschluß an die Endverfestigung nicht rückgängig gemacht werden. Sie bedeutet deshalb eine unerwünschte Verminderung bzw. Zerströrung der Bauschigkeit des Vliesstoffes.

Unabhängig von den vorstehend geschilderten technischen Problemen des Verfahrens gemäß DE—OS 26 18 245 steht einer großtechnischen Anwendung des Verfahrens die Notwendigkeit entgegen, das Bindemittel des bedruckten Vliesstoffes in einer Stickstoffatmosphäre zu vernetzen. Es werden nur Vorschubgeschwindigkeiten von 6 m/min genannt, was weit unterhalb der derzeit üblichen Arbeitsgeschwindigkeiten liegt.

Es ist auch bekannt, anstelle von Lösungsmitteln dünnflüssige monomere Ester der Acrylsäure zuzusetzen, die bei der Bestrahlung in das Polymernetzwerk mit eingebaut werden, wie z.B. Butylacrylat, Hydroxyäthylacrylat, Hydroxypropylacrylat, Butandioldiacrylat, Hexandioldiacrylat, Trimethylolpropantriacrylat und andere. Die viskositätserniedrigende Wirkung dieser Verdünner ist im allgemeinen umso stärker, je niedriger das Molekulargewicht ist. Im selben Maße nehmen jedoch Flüchtigkeit und Toxizität zu. Für sich allein polymerisiert, ergeben die Monomeren meist spröde, brüchige Produkte mit unzureichender mechanischer Festigkeit. In Verbindung mit Präpolymeren verschlechtern sie deren mechanische Eigenschaften und damit auch die Flexibilität, Zähigkeit und Weichheit der hiermit gebundenen Vliesstoffe.

Ein weiteres Problem ergibt sich daraus daß bei der Polymerisation von Präpolymer/Monomer—Gemischen nicht umgesetzte Monomer im Polymerisat verbleiben und außer störenden Gerüchen auch Hautreizungen verursachen können. Dies ist aus reaktionskinetischen Gründen bei monofunktionellen Monomeren stets der Fall. Bei handelsüblichen Mischungen hinterbleiben 1 Gewichtsprozent oder mehr dieser Monomeren im Polymerisat. Bei difunktionellen Monomeren ist aus den genannten reaktionskinetischen Gründen die Gefahr nicht umgesetzter Restmonomeren wesentlich geringer, aber immer noch vorhanden. Erst tri- tetra- usw. -funktionelle Monomere werden vollständig in das Polymer-Netzwerk eingebaut.

Die genannten Tatsachen bedeuten, daß mono- und difunktionelle Reaktiv-verdünner tunlichst zu vermeiden sind. Reine Präpolymere oder Oligomere bzw. ihre Abmischungen mit tri- oder mehrfunktionellen Monomeren sind aber stets hochviskos und konnten bisher nicht verarbeitet werden.

Der Erfindung liegt die Aufgabe zugrunde, ein Verfahren zu entwickeln, das die Verfestigung eines nicht vorgebundenen Faservlieses mit einer aufgedruckten Mischung aus hochviskosen präpolymeren Bindemitteln ermöglicht, und das bei einer einfachen Durchführbarkeit hohe Arbeitsgeschwindigkeiten von z.B. mehr als 50 m/min ermöglicht.

Diese Aufgabe wird mit den kennzeichnenden Merkmalen der Anspruchsfassung gelöst. Das erfindungsgemäße Verfahren besteht in seiner einfachsten Ausführung darin, daß das von den Krempeln bzw. Deckelkarden, Rando-Webbern oder Spinvlies-Anlagen kommende Faservlies durch zwei beheizte Walzen geführt und sofort anschließend mit einer Druckmaschine mit dem Präpolymeren mit einer Viskosität von 500 bis 5000 cP, vorzugsweise 1000 bis 4000 cP, bedruckt wird. Das Präpolymer wird unmittelbar anschließend durch Hindurchführen des bedruckten Faservlieses unter einer handelsüblichen UV-Lampe ausgehärtet.

Das Hindurchführen des Faservlieses durch den Walzenspalt dient der Glättung und Verdichtung (ohne die Fasern miteinander zu verkleben), unter gleichzeitiger Erwärmung der einzelnen Fasern. Das Walzwerk hat bei einer Geschwindigkeit von 50 bis 150 m/min eine Temperatur zwischen 120 und 190°C, vorzugsweise eine Temperatur von 130 bis 180°C, mit der Maßgabe, daß eine Temperatur von 20°C unter dem Schmelz- bzw. dem Zersetzungspunkt der Fasern des Vliese nicht überschritten wird. Die genannten Bedingungen führen somit in keinem Falle zu einer gegenseitigen Verklebung der in dem Vlies enthaltenen Fasern. Das Vlies erhält jedoch ein äußerlich glattes Erscheinungsbild, und es läßt sich in einer ausgezeichneten Weise mit den genannten hochviskosen präpolymeren Bindemitteln bedrucken. Überraschenderweise ergeben sich hinsichtlich der Bedruckbarkeit von Faservliesen aus synthetischen und aus natürlichen Fasern keinerlei Unterschiede. Aus dieser Tatsache ist eindeutig zu entnehmen, daß auch eine temporäre Bindung, wie sie zum Beispiel beim Entfernen von Feuchtigkeit aus bestimmten Fasern eintreten kann, nicht vorliegt. Die Eigenstabilität des Faservlieses ist beim Verlassen des Walzwerkes auch relativ gering und es ist auf normale Weise, beispielsweise durch Auf- und Abrollen, nicht handhabbar.

Die Ursache für die ausgezeichnete Bedruckbarkeit des Faservlieses mit dem hochviskosen Bindemittel ist nicht voll geklärt. Ein wesentliches Merkmal besteht wahrscheinlich darin, daß die Fasern während des Durchganges durch das Walzwerk Wärme in sich speichern, die ausreichend ist, die Viskosität des als Bindemittel verwendeten Präpolymeren im Augenblick der Berührung derartig zu vermindern, daß eine gute Benetzung der Fasern erfolgt. Gleichzeitig kommt es zu einer gegenseitigen Verklebung der Fasern im Bereich der Druckpunkte. Das Faservlies verläßt das Druckwerk völlig unbeschädigt und es tritt überraschenderweise keinerlei Verklebung einzelner Fasern der Vliesoberfläche mit den Druckwalzen ein. Das erfindungsgemäße Verfahren erweist sich somit in der praktischen Anwendung also außerordentlich unproblematisch. Es unterliegt keinerlei Beschränkungen hinsichtlich der Variation der angewendeten Druckmuster.

Für die Durchführung des Verfahrens ist es von Vorteil, wenn das Druckwerk sich unmittelbar an das Walzwerk anschließt. Der Achsabstand soll möglichst nicht mehr als 100 cm betragen.

Es wurde gefunden, daß die Oberfläche der Walzen des Walzwerks von Bedeutung ist im Hinblick auf die mechanischen Eigenschaften des fertigen Vliesstoffes. Insbesondere die Drapierfähigkeit wird hierdurch beeinflußt.

Die Oberfläche der Walzen des Walzwerks kann grundsätzlich jede gewünschte Güte haben, von hochglanzpoliert bis stark profiliert. Eine gute Drapierfähigkeit und eine gute Bauschigkeit des fertigen Vliesstoffes wird jedoch insbesondere dann erhalten, wenn die Oberflächen leicht aufgerauht oder mit einer sehr feinen Oberflächengravur versehen sind. Die beiden Walzen sind normalerweise vollkommen identisch ausgeführt, und sie weisen die gleiche Temperatur auf. Eine voneinander abweichende Temperatursteuerung der beiden Walzen kann jedoch im Einzelfall durchaus zweckmäßig sein.

Die Gestaltung des Druckmusters, in dem das präpolymere Bindemittel aufgedruckt wird, muß dem Ziel dienen, einen möglichst voluminösen Vliesstoff zu erhalten, der nicht nur eine gute mechanische Festigkeit und eine gute Abriebfestigkeit aufweist, sondern der im Hinblick auf die bevorzugte Verwendung als Einlagevliesstoff auch ausgezeichnet beständig gegen chemische Reinigung ist. Als besonders günstig hat sich ein Muster aus zwei Scharen paralleler Linien erwiesen, die sich unter einem Winkel von 90° gegenseitig schneiden und die mit der Laufrichtung jeweils einen Winkel von 45° bilden. Die Teilung beider Linienscharen ist identisch, und sie liegt in einem Bereich von 1 bis 5 mm, vorzugsweise in einem Bereich von 1,5 bis 3,5 mm. Die Linien haben eine Breite von 0,1 bis 0,5 mm, vorzugsweise eine Breite von 0,3 mm.

Neben dem einseitigen Auftrag kann das Muster auch beidseitig auf dem Vliesstoff aufgedruckt werden, wobei zweckmäßigerweise die Knotenpunkte des Musters der einen Seite in die Zwischenräume des Musters der anderen Seite hineingelegt werden. Es ist auch möglich, die beiden Seiten mit unterschiedlichen Druckmustern zu versehen.

Die Auftragsmenge des Präpolymeren richtet sich nach dem angestrebten Verwendungszweck. Für reinigungs- und waschfeste Einlagevliesstoffe verwendet man eine Auftragsmenge von 5 bis 30, vorzugsweise von 10 bis 25 Gew. % der Fasermasse.

Die Vertielung des Bindemittels über den Querschnitt kann homogen erfolgen, in dem die Vorwärmung des Vliesstoffes homogen vorgenommen wird. Eine progressive Verteilung des Bindemittels tritt dann ein, wenn die Rückseite auf eine niedrigere Temperatur vorgewärmt ist, was beispielsweise mit einer speziellen Temperatursteuerung des Walzwerkes realisiert werden kann. Von besonderem Vorteil ist es in beiden Fällen, daß im Gegensatz zum Drucken mit wässrigen Dispersionen oder Lösungen während der Aushärtung keine Bindemittelmigration eintritt. Das Bindemittel wird vielmehr während der Bestrahlung mit ultraviolettem Licht in der Position verfestigt, in der es sich unmittelbar befindet. Das Verfahren kann daher in einfacher Weise so gesteuert werden, daß eine Vlies-Delaminierung nicht auftritt.

Als aufzutragende UV-härtbare Bindemittel kommen Produkte verschiedener Hersteller in Betracht. Eine wesentliche Voraussetzung ist, wie bereits ausgeführt, eine entsprechend hohe Viskosität. Für den bevorzugten Einsatz der Vliesstoffe als Einlagestoffe für die Bekleidungsindustrie ist die Beständigkeit gegen chemische Reinigungsmittel, wie beispielweise gegen Perchloräthylen, ein entscheidendes Kriterium. Diese Beständigkeit wird durch eine verhältnismäßig hohe Vernetzungsdichte erreicht. Harze mit mehr als 2 Acrylatfunktionen pro Molekül werden daher bevorzugt. Handelsübliche Harze dieser Art sind vorzugsweise acrylierte Polyester, Polyurethane, Polyepoxide und Polyvinylverbindungen. Sie können entweder für sich oder in Abmischung mit mehrfunktionellen Mono- oder vorteilhafterweise mit mehrfunktionellen Oligomeren eingesetzt werden. Auch Gemische von zwei oder mehr Harzen lassen sich einsetzen. Zur Reduzierung der Viskosität besonders hochviskoser Bindemittel oder Bindemittel-Mischungen können diese auch in erwärmtem Zustand eingesetzt werden.

Die UV-härtenden Bindemittel erfordern zur Aktivierung den Zusatz eines Initiators, beispielsweise den Zusatz von Benzoinbutyläther, Benzoinäthyläther, Benzildimethylketal, Diäthoxyacetophenon, oder Benzophenon.

Es ist ein besonderer Vorteil des erfindungsgemäßen Verfahrens, daß die benötigte Menge an dem teuren Initiator relativ gering ist. Die Ursache hierfür liegt darin, daß die Härtungsgeschwindigkeit bei der UV-Bestrahlung mit der Ausgangsviskosität des verwendeten Präpolymeren steigt. Die mit dem erfindungsgemäßen Verfahren ermöglichte Verarbeitung hochviskoser Harze bzw. Harzmischungen ist deshalb mit einer relativ geringen Menge an Initiator möglich.

Außer dem Initiator können weitere Stoffe zugesetzt werden, die dessen Wirkung verstärken bzw. eine weitere Reduzierung der Einsatzmenge einschließen. Hierfür kommen insbesondere verschiedene Amine, wie beispielsweise Triäthanolamin, in Frage. Weiterhin können, falls erforderlich, auch optische Aufheller zugesetzt werden. Dies ist bei textilen Anwendungen oftmals von Vorteil. Bevorzugt sind naturgemäß solche Aufheller, die sich in den Bindemitteln gut lösen und die genügend UVbeständig sind, um den intensiven UV-Belichtungsprozess zu überstehen. Obwohl optische Aufheller von Natur aus UV-Absorber sind und daher eigentlich hemmend auf dei Härtungsreaktion wirken sollten, hat es sich überraschenderweise gezeigt, daß sie ohne Einbuße an Härtungsgeschwindigkeit zugesetzt werden können. Weiterhin ist es möglich, feste oder flüssige Weichmacher zuzusetzen, wie zum Beispiel Dibutylphthalat oder Toluosulfonamid. Bei beiden Stoffen bezieht sich der Weichmachungseffekt im Sinne der vorliegenden Erfindung auf die mechanischen Eigenschaften des ausgehärteten Bindemittels.

Auch Pigmente können bei Bedarf dem Bindemittel zugesetzt werden, wobei jedoch zu beachten ist, daß diese mehr oder weniger stark die UV-Strahlung absorbieren und daher die Aushärtung behindern können. Schließlich ist es auch möglich, Scheifmittel, wie Quarzmehl, Korund usw. zur Harzmischung hinzuzufügen. Man erhält so besonders flexible Schleifvliese.

Zur Härtung des Präpolymeren nach dem erfindungsgemäßen Verfahren sind alle handelsüblichen Quecksilberhochdrucklampen geeignet, die eine Leistung von mindestens 80 Watt/cm erreichen. Die Belichtung des imprägnierten Vlieses wird in den meisten Fällen von beiden Seiten vorgenommen. Bei sehr leichten Vliesen von ca. 25 g/m² oder weniger ist es jedoch auch möglich, nur von einer Seite zu belichten.

Die zu installierende elektrische Leitung für die UV-Strahler hängt naturgemäß von der angestrebten Fahrgeschwindigkeit und von der Reaktivität des UV-härtbaren Harzes ab. Die erfindungsgemäße Verarbeitung hochviskoser und hochreaktiver Bindemittel hat hier den Vorteil, daß die installierte elektrische Leitung bzw. die Zahl der UV-Strahler niedrig gehalten werden kann, auch bei Fahrgeschwindigkeiten von 100 bis 150 m/min. Es ist im allgemeinen auch nicht erforderlich, zur Geschwindigkeitssteigerung die UV-Härtung unter Schutzgas, beispielsweise unter Stickstoff, durchzuführen.

Der nach dem erfindungsgemäßen Verfahren hergestellte Vliesstoff ist ungewöhnlich weich, voluminös und füllig. Auffallend und charakteristisch ist, daß dieser trotz guter Festigkeit nicht mehr den sogenannten "sprungigen Griff" aufweist, der bisher das Kennzeichen aller mittels Bindemitteln verfestigten Vliesstoffe war. Dies ist ein besonderer Vorteil besonders für die Verwendung als Einlagestoff für moderne Freizeitbekleidung, deren weicher fließender Charakter nicht durch einen sprungelastischen Einlagevliesstoff beeinträchtigt werden soll.

Die Kombination der guten Reinigungsbeständigkeit mit der Weichheit, Drapierfähigkeit und Fülle stellt ein besonders Problem bei der Herstellung von Vliesstoffen dar. Der erfindungsgemäße Vliesstoff erfüllt alle diese Forderungen. Er ist trotz seiner Weichheit und Fülle ausgezeichnet wasch- und reinigungsfest. Die Ursache hierfür liegt in der ungewöhnlichen Bindemittelverteilung innerhlab des Vliesstoffes. Das hochviskose UV-härtbare Bindemittel verteilt sich im Moment des Aufdruckes nicht gleichmäßig über die gesamte Oberfläche der Fasern, sondern wandert in winzigen Tröpfchen vorzugsweise an die Kreuzungspunkte der Fasern. Diese Bindepunkte sind jedoch ganz besonders fest, da der Binder direkt auf der Faseroberfläche haftet, ohne daß eine Trennschicht aus Tensiden und anderen Stoffen vorhanden ist, wie bei konventionellen Bindern, die aus wässriger Dispersion appliziert sind. Bei den beschriebenen geringen Auflagemengen des Bindemittels werden jedoch nicht alle Kreuzungspunkte gebunden. Durch diese ungewöhnliche bzw. neuartige Bindungsart entsteht ein Vliesstoff, der sowohl fest als auch ungewöhnlich weich und textil ist.

Das beschriebene Verfahren ist äußerst rationell und kostengünstig anzuwenden. Es erfüllt alle Voraussetzungen, sich im großtechnischen Maßstab durchzusetzen.

Beispiel 1

Ein längsorientiertes Faservlies mit einem Flächengewicht von 20 g/m², bestehend aus Polyesterfasern mit einem Titer von 1,3 dtex bei einer Länge von 36 mm wird mit einer Geschwindigkeit von 100 m/min durch ein Walzenpaar geleitet. Die beiden Walzen sind gleichartig ausgebildet. Sie haben einen Durchmesser von 200 mm und tragen auf ihrer Oberfläche eine 80 mesh-Gravur, das heißt, die einzelnen Vertiefungen haben einen gegenseitigen Abstand von ca. 0,3 mm, bei einer Tiefe von ca. 0,1 mm. Die Walzen sind auf 175° C erwärmt. Der Walzenabstand ist so eingestellt, daß sich die beiden Walzen gerade berühren, ohne jedoch aufeinander einen meßbaren Druck auszuüben. Der Faserflor hat vor dem Eintritt in den Walzenspalt eine Dicke von ca. 10 mm, die sich während des Durchganges durch das Walzenpaar vermindert auf eine Dicke von ca. 1 mm.

Die mechanische Festigkeit des Faservlieses beträgt nach dem Verdichten und Temperieren 1,5 N in Längsrichtung und 0,08 N in Querrichtung.

In einem Achsabstand von 800 mm von dem Walzwerk wird die Faserbahn in einem Druckaggregat von einer Seite mit einem Muster aus zwei Scharen paralleler Linien bedruckt, die sich unter einem Winkel von 90° schneiden, und die der Laufrichtung jeweils unter einem Winkel von 45° zugeordnet sind. Der Abstand der Linien voneinander beträgt 2,5 mm, die jeweilige Breite 0,3 mm.

Die aufgedruckte Bindemittelmischung hat während der Verarbeitung bei 24° eine Viskosität von 3300 mPas sec.

Die Mischung hat die folgende Zusammensetzung:

| | |
|---|---|
| Polyurethan-Präpolymer (Ebecryl 830, Union Chimique Belge) | 50 Gewichtsteile |
| Polyurethan-Oligomer (OTA 840, Union Chimique Belge) | 50 Gewichtsteile |
| Optischer Aufheller (Hostalux KCB, Hoechst AG) | 0.03 Gewichtsteile |
| Benzildimethylketa (Luzirin, BDK, BASF AG) | 1 Gewichtsteile |
| Benzophenon | 2 Gewichtsteile |
| Methyldiäthanolamin | 3 Gewichtsteile |

Die Auflagemenge beträgt 2,5 g/m². Sofort anschließend wird die Bahn durch Belichtung mit einer Quecksilber-Hochdrucklampe verfestigt. Ihre Leistung beträgt 200 Watt/cm.

Der erhaltene Vliesstoff hat eine Dicke von 0,23 mm. Er ist weich und drapierfähig. Er wird mit einem üblichen Polyamid-Schmelzkleber in Punktform bedruckt mit einer Auflagemenge von 12 g/m² und anschließend mit einem Damenblusenoberstoff verbügelt. Die Waschund Reinigungsbeständigkeit des Laminats ist ausgezeichnet. Es tritt keine Pillingbildung auf.

Beispiel 2

Ein quergelegtes Faservlies mit einem Flächengewicht von 30 g/m² aus hochgekräuselten Nylon-66-Fasern mit einem Titer von 3,3 bei einer Länge von 51 mm wird mit einer Geschwindigkeit von 50 m/min durch ein Paar auf 200°C beheizter glatter Stahlwalzen gefahren. Die Spaltweite zwischen beiden Walzen beträgt 0,01 mm. Sofort anschließend wird der Flor mit der in Beispiel 1 beschriebenen Harzmischung in einer Rotationsfilmdruckmaschine bedruckt. Druck- und Unterdruckzylinder der Druckmaschine sind galvanisch aufgerauht. Das Druckmuster ist analog Beispiel 1, jedoch beträgt die Rasterteilung 3,5 mm.

Die anschließende Vernetzung erfolgt beidseitig durch Belichtung mit je einer 200 Watt/cm Quecksilber-Hochdrucklampe.

Der erhaltene Vliesstoff ist extrem weich und voluminös. Er ist gut wasch- und reinigungsfest.

Beispiel 3

Ein 35 g/m² schwerer, längsorientierter Faserflor aus Polyacrylnitrilfasern mit einem Titer von 3,3 bei einer Länge von 60 mm, glänzend, wird mit einer Geschwindigkeit von 80 m/min durch ein auf 195°C beheiztes Walzwerk geleitet, analog Beispiel 1. Sofort anschließend wird der Flor analog Beispiel 1 von zwei Seiten mit insgesamt 8 g/m² der in Beispiel 1 beschriebenen Harzmischung bedruckt. Die Druckraster haben eine Teilung von jeweils 2,1 mm. Das Vlies wird danach beidseitig mit je einer Quecksilber-Hochdrucklampe von 200 Watt/cm Leistung belichtet und dadurch verfestigt.

Der fertige Vliesstoff hat eine Reißfestigkeit in Längsrichtung von 50 N/5 cm Streifenbreite. Er ist besonders geeignet für den Einsatz als sogenanntes "Overlay" in glasfaserverstärkten Kunststoffen.

**Patentansprüche**

1. Verfahren zur Verfestigung eines Faservlieses durch Aufdrucken von 5 bis 30% seines Gewichtes, eines präpolymeren Bindemittels, auf einer oder beider Oberflächen und durch dessen nachfolgende Vernetzung unter der Einwirkung einer ultravioletten Strahlung, dadurch gekennzeichnet, daß das Vlies unmittelbar vor dem Bedrucken verdichtet, geglättet und ohne Faserverklebung erwärmt wird, daß ferner eine Präpolymermischung verwendet wird, die während des Aufbringens eine Viskosität von 500 bis 5000 m Pa s aufweist, und daß die bedruckte Oberfläche unmittelbar danach mit ultraviolettem Licht bestrahlt wird.

2. Verfahren nach Anspruch 1, dadurch gekennzeichnet, daß das Glätten und das Erwärmen des Faservlieses mit einem Walzwerk vorgenommen wird, dessen Walzen ohne einen besonderen Druck aneinander anliegen und das bei einer Geschwindigkeit von 50 bis 150 m/min auf eine Temperatur von 120 bis 190°C eingestellt ist, mit der Maßgabe, daß eine Temperatur von 20°C unterhalb des Schmelz- oder Zersetzungspunktes der Fasern nicht überschritten wird.

3. Verfahren nach Anspruch 1 bis 2, dadurch gekennzeichnet, daß eine Präpolymermischung verwendet wird, die während des Aufbringens eine Viskosität von 1000 bis 4000 m Pa s aufweist.

4. Verfahren nach Anspruch 1 bis 3, dadurch gekennzeichnet, daß die Viskosität der Präpolymermischung durch Zusatz von trifunktionellen Acrylat-Monomeren, wie z.B. Pentaerythrit - triacrylat, Pentaerythrit - tetra-acrylat oder Trimethylolpropantriacrylat und/oder durch Zusatz mehrfunktioneller Acrylat-Oligomere auf Basis niedermolekularer Polyurethane, Polyester oder Polyepoxide und/oder durch eine Erwärmung, die während des Druckvorganges eingestellt wird.

5. Verfahren nach Anspruch 1 bis 4, dadurch gekennzeichnet, daß die Bestrahlung mit Quecksilber-Hochdrucklampen vorgenommen wird, die je cm Vliesstoffbreite eine Leistung von wenigstens 80 Watt abstrahlen.

**Revendications**

1. Procédé pour la consolidation d'un voile de fibres par application, par impression sur une de ses faces ou sur les deux faces, de 5 à 30% de son poids d'un liant prépolymère et par reticulation subséquente sous l'influence d'un rayonnement ultraviolet, procédé caractérisé en ce que le voile, compacté, rendu lisse et sans collage des fibres est, immediatement avant l'impression, chauffé; en ce qu'on utilise en outre un mélange ou une composition de prépolymère qui, pendant l'application, présente une viscosité de 500 à 5000 mPas; et en ce qu'on soumet immédiatement ensuite la surface imprimée à une irradiation par de la lumière ultraviolette.

2. Procédé selon la revendication 1, caractérisé en ce que le lissage et le chauffage du voile de fibres sont réalisés à l'aide d'une machine à rouleaux dont les rouleaux reposent l'une sur l'autre sans pression particulière et en ce que, pour une vitesse de 50 à 150 m/min, on règle à une température de 120 à 190°C, étant bien entendu qu'une température inférieure de 20°C au point de fusion ou de décomposition des fibres n'est pas excédée.

3. Procédé selon la revendication 1 ou 2, caractérisé en ce qu'on utilise une composition, ou mélange, de prépolymère qui, pendant son application, présente une viscosité de 1000 à 4000 mPas.

4. Procédé selon l'une des revendications 1 à 3, caractérisé en ce que l'on ajuste la viscosité de la composition du prépolymère par addition de monomères acryliques trifonctionnels comme, par exemple, du triacrylate de pentaérythritol, du tétraacrylate de pentaérythritol ou du triacrylate de triméthylolpropane et/ou par addition d'oligomères acryliques comportant plusieurs groupes fonctionnels à base de polyuréthannes, de polyesters ou de polyépoxydes à bas poids moléculaire et/ou par un chauffage que l'on réalise pendant le processus d'impression.

5. Procédé selon l'une quelconque des revendications 1 à 4, caractérisé en ce qu'on effectue l'irradiation à l'aide de lampes à haute pression de mercure qui, par centimètre de largeur du voile, ont une puissance de rayonnement d'au moins 80 W.

**Claims**

1. A process for stabilizing a fibre fleece by imprinting it with 5 to 30% of its weight of a prepolymer binder mixture onto one or both surfaces and immediately thereafter polymerising the binder by exposing it to ultra-violet light, characterized in that the fleece is compacted, smoothed and heated without permitting the cementing of fibres immediately before the imprinting. That a prepolymeric mixture is employed, having a viscosity of about 500 to 5000 m Pa/s and exposing the printed surface immediately thereafter to ultra-violet light.

2. A process according to claim 1, characterized in that the smoothing and heating of the fibre fleece is carried out with the aid of a roller system, the rollers of which abut without a particular pressure and which rollers are set at a rate of 50 to 150 m/min and at a temperature of 120° to 190°C provided that the temperature is at least 20°C below the melting and decomposition point of the fibres.

3. A process according to claims 1 to 3, characterized in that a prepolymer mixture is used having a viscosity of 1000 to 4000 m Pa/s during the application.

4. A process according to claims 1 to 3, characterized in that the viscosity of the prepolymer mixture is controlled by the addition of trifunctional acrylate monomers, such as, for example pentaerythritel triacreylate, pentaerytritel tetraacrylate or trimethylol propane triacrylate and/or by adding polyfunctional acrylate oligomers based on low molecular polyurethanes polyester or polyepoxides and/or by heating which takes place during the printing process.

5. A process according to claims 1 to 4, in which the radiation is carried out with mercury high-pressure lamps which radiate a wattage of at least 80 watt per cm of fleece material width.